(19) **Europäisches Patentamt / European Patent Office / Office européen des brevets**

(11) **EP 4 053 073 A1**

(12) **EUROPEAN PATENT APPLICATION**
published in accordance with Art. 153(4) EPC

(43) Date of publication:
**07.09.2022 Bulletin 2022/36**

(21) Application number: **20881522.5**

(22) Date of filing: **20.10.2020**

(51) International Patent Classification (IPC):
**C01B 21/064** $^{(2006.01)}$ **C08L 101/00** $^{(2006.01)}$
**C08K 3/38** $^{(2006.01)}$

(52) Cooperative Patent Classification (CPC):
**C01B 21/064; C08K 3/38; C08L 101/00**

(86) International application number:
**PCT/JP2020/039314**

(87) International publication number:
**WO 2021/085223 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2019 JP 2019195534**

(71) Applicants:
• **Tokuyama Corporation**
  **Shunan-shi, Yamaguchi 745-8648 (JP)**
• **Shinshu University**
  **Matsumoto-shi, Nagano 390-8621 (JP)**

(72) Inventors:
• **IKEDA, Yuichi**
  **Shunan-shi, Yamaguchi 745-8648 (JP)**

• **DAIKI, Shota**
  **Shunan-shi, Yamaguchi 745-8648 (JP)**
• **FUJINAMI, Kyoichi**
  **Shunan-shi, Yamaguchi 745-8648 (JP)**
• **NAWATA, Teruhiko**
  **Shunan-shi, Yamaguchi 745-8648 (JP)**
• **TESHIMA, Katsuya**
  **Nagano-shi, Nagano 380-8553 (JP)**
• **YAMADA, Tetsuya**
  **Nagano-shi, Nagano 380-8553 (JP)**

(74) Representative: **Bittner, Thomas L.**
**Boehmert & Boehmert**
**Anwaltspartnerschaft mbB**
**Pettenkoferstrasse 22**
**80336 München (DE)**

(54) **METHOD FOR PRODUCING HEXAGONAL BORON NITRIDE POWDER, AND HEXAGONAL BORON NITRIDE POWDER**

(57) Provided is a production method which makes it possible to improve a filling property, with respect to a resin, of a hexagonal boron nitride powder which contains hexagonal boron nitride particles each having a low aspect ratio, while maintaining low thermal conduction anisotropy of the hexagonal boron nitride powder. A method of producing a hexagonal boron nitride powder includes disintegrating, by a means which substantially does not involve pulverization of primary particles, a hexagonal boron nitride raw material powder which contains (i) hexagonal boron nitride particles each having an aspect ratio of 1.5 to 5.0 and (ii) an aggregate that contains hexagonal boron nitride particles each having an aspect ratio of more than 5.0.

EP 4 053 073 A1

**Description**

The present invention relates to a novel method of producing a hexagonal boron nitride powder, a novel hexagonal boron nitride powder which can be obtained by such a production method, and a novel resin composition which contains the hexagonal boron nitride powder. Specifically, the present invention provides a method which makes it possible to improve a filling property, with respect to a resin, of a hexagonal boron nitride powder which contains (i) hexagonal boron nitride particles each having a low aspect ratio and (ii) an aggregate that contains hexagonal boron nitride particles each having a high aspect ratio and being likely to form an aggregate, while maintaining low thermal conduction anisotropy of the hexagonal boron nitride powder. The present invention also provides a hexagonal boron nitride powder which can be obtained by the above method, has a high filling property with respect to a resin, and makes it possible to reduce thermal conduction anisotropy of a resin composition. The present invention further provides a resin composition which contains the above hexagonal boron nitride powder.

Background

Hexagonal boron nitride is a material which has dielectric strength and thermal conductivity, and is used as a thermal conductive filler for heat releasing members. Hexagonal boron nitride has a lower thermal conductivity in a thickness direction (direction of a c-axis) thereof than in a width direction (direction of a plane formed by an a-axis and a b-axis) thereof, and therefore has high thermal conduction anisotropy. Thus, in a case where a resin composition obtained by filling a resin with a hexagonal boron nitride powder is used as a heat releasing member, sufficient thermal conductivity is sometimes not achieved in a specific direction.

In order to suppress such thermal conduction anisotropy, it has been attempted to produce particles each having low anisotropy, i.e., a low aspect ratio, which is a ratio (L/t) between a length (L) of a particle in a width direction (direction of a plane formed by an a-axis and a b-axis) and a length (t) of the particle in a thickness direction (direction of a plane formed by a c-axis). For example, JP 2016-141600 suggests a method of obtaining hexagonal boron nitride particles each having a low aspect ratio by employing steps of mixing a boron nitride powder and a lithium salt and heating a resultant mixture. By using a hexagonal boron nitride powder which contains such hexagonal boron nitride particles each having a low aspect ratio, it becomes easy to, in a resin composition, fill a resin with the hexagonal boron nitride powder such that orientation does not occur. This makes it possible to reduce thermal conduction anisotropy of the resin composition.

Summary

Technical Problem

However, it was found that in a case where a resin composition is produced by filling a resin with the above hexagonal boron nitride powder having a low aspect ratio, a filling property of the hexagonal boron nitride powder is insufficient and accordingly handleability of the resin composition is poor.

Therefore, an object of an aspect of the present invention is to provide a production method which makes it possible to improve a filling property, with respect to a resin, of a hexagonal boron nitride powder having a low aspect ratio, while maintaining low thermal conduction anisotropy of the hexagonal boron nitride powder.

Solution to Problem

As a result of conducting diligent studies, the inventors of the present invention found that, in a method of obtaining a hexagonal boron nitride powder having a low aspect ratio (also including the above method), a rate of production of intended particles each having a low aspect ratio is not always high and hexagonal boron nitride particles each having a high aspect ratio are also present in an obtained hexagonal boron nitride powder, and found that these particles form a relatively large aggregate and such an aggregate causes deterioration in filling property with respect to a resin. That is, hexagonal boron nitride particles each having a scale-like shape and each having a high aspect ratio are likely to form an aggregate and cause a space between the particles inside the aggregate due to such a shape. Therefore, in a case where a resin is filled with the aggregate, the resin is unlikely to enter such a space between the particles inside the aggregate. This makes it difficult to improve a filling property.

As a result of conducting further studies on the basis of the above findings, the inventors of the present invention found that the above object can be attained by disintegrating the hexagonal boron nitride powder by a means which substantially does not involve pulverization of the above primary particles each having a low aspect ratio (a means which does not cause a cleavage fracture of the primary particles) and thereby selectively reducing the aggregate which causes deterioration in filling property with respect to the resin. Consequently, the inventors of the present invention completed the present invention.

That is, an aspect of the present invention is a method of producing a hexagonal boron nitride powder, including disintegrating, by a means which substantially does not involve pulverization of primary particles, a hexagonal boron nitride raw material powder which contains (i) hexagonal boron nitride particles each having an aspect ratio of 1.5 to 5.0 and (ii) an aggregate that contains hexagonal boron nitride particles each having an aspect ratio of more than 5.0.

It is preferable that the hexagonal boron nitride raw material powder contain, at a proportion of not less than 20% by number but not more than 90% by number, the hexagonal boron nitride particles each having an aspect ratio of 1.5 to 5.0. It is also preferable that the hexagonal boron nitride raw material powder have a D50 of 0.2 $\mu$m to 10.0 $\mu$m and a D90/D10 of more than 3.0.

It is preferable that when the hexagonal boron nitride raw material powder is disintegrated by the means which substantially does not involve pulverization of the primary particles, the hexagonal boron nitride raw material powder be disintegrated so that the hexagonal boron nitride powder has a D90/D10 of not more than 3.0.

Moreover, the present invention provides a hexagonal boron nitride powder which can be produced by the above method and which exhibits a high filling property even in a case where the hexagonal boron nitride powder contains, together with hexagonal boron nitride particles each having a low aspect ratio, hexagonal boron nitride particles each having a high aspect ratio, which form an relatively large aggregate that causes deterioration in filling property with respect to a resin.

That is, the present invention provides a hexagonal boron nitride powder containing, at a proportion of not less than 20% by number, hexagonal boron nitride particles each having an aspect ratio of 1.5 to 5.0, the hexagonal boron nitride powder having a D50 of 0.2 $\mu$m to 10.0 $\mu$m and a D90/D10 of not more than 3.0.

Furthermore, the present invention provides a resin composition which contains the above hexagonal boron nitride powder and which has low thermal conduction anisotropy and favorable handleability.

Advantageous Effects of Invention

According to the production method in accordance with an aspect of the present invention, it is possible to obtain a hexagonal boron nitride powder which contains hexagonal boron nitride particles each having a low aspect ratio and which contains a small number of aggregates that cause deterioration in filling property. When a resin is filled with the hexagonal boron nitride powder thus obtained, thermal conduction anisotropy is reduced due to the hexagonal boron nitride particles each having a low aspect ratio. Furthermore, since the hexagonal boron nitride powder has a high filling property, a resin composition comes to have favorable handleability. This makes it easy to, for example, produce a resin sheet which has a sufficiently high thermal conductivity.

Description of Embodiments

<Method of producing hexagonal boron nitride powder>

A method of producing a hexagonal boron nitride powder in accordance with an embodiment of the present invention includes disintegrating, by a means which substantially does not involve pulverization of primary particles, a hexagonal boron nitride raw material powder which contains (i) hexagonal boron nitride particles each having an aspect ratio of 1.5 to 5.0 and (ii) an aggregate that contains hexagonal boron nitride particles each having an aspect ratio of more than 5.0.

In this manner, by carrying out disintegration by the means which substantially does not involve pulverization of the primary particles (hereinafter also referred to as a "disintegrating process"), it is possible to prevent cleavage fracture of the hexagonal boron nitride particles each having an aspect ratio of 1.5 to 5.0. Furthermore, by reducing the aggregate which contains the hexagonal boron nitride particles each having an aspect ratio of more than 5.0 and which causes deterioration in filling property, it is possible to improve the filling property while maintaining a characteristic of being able to reduce thermal conduction anisotropy.

In an embodiment of the present invention, the aspect ratio is expressed by a ratio (L/t) between a length (L) of a particle in a width direction (direction of a plane formed by an a-axis and a b-axis) and a length (t) of the particle in a thickness direction (direction of a plane formed by a c-axis).

In an embodiment of the present invention, the aspect ratio is measured as follows: a length (L) of a hexagonal boron nitride particle in a width direction and a length (t) of the hexagonal boron nitride particle in a thickness direction are measured from an SEM image of an hexagonal boron nitride powder, and then the aspect ratio (L/t) of the particle is calculated. In this manner, 300 different particles are randomly selected, and the aspect ratio of each of the particles is calculated. From obtained results, a proportion of the hexagonal boron nitride particles each of which has an aspect ratio falling within a given range is calculated.

In the hexagonal boron nitride raw material powder used in the method of producing a hexagonal boron nitride powder in accordance with an embodiment of the present invention, a proportion of the hexagonal boron nitride particles each having an aspect ratio of 1.5 to 5.0, i.e., a low aspect ratio is preferably not less than 20% by number, more preferably not less than 40% by number, and still more preferably not less than 50% by number, because as the proportion becomes higher, a hexagonal boron nitride powder to be obtained has lower thermal conduction anisotropy. An upper limit is not particularly limited, but is generally not more than 95% by number, particularly not more than 90% by number, and even not more than 80% by number.

The hexagonal boron nitride raw material powder used in the method of producing a hexagonal boron nitride powder in accordance with an embodiment of the present invention contains the aggregate which contains the hexagonal boron nitride particles each having an aspect ratio of more than 5.0. As has been described, such a hexagonal boron nitride aggregate causes deterioration in filling property. Therefore, by using the production method in accordance with an embodiment of the present invention with respect to the hexagonal boron nitride raw material powder which contains the aggregate, it is possible to improve the filling property. Such an aggregate may be constituted only by the hexagonal boron nitride particles each having an aspect ratio of more than 5.0 or may be alternatively constituted by both of the hexagonal boron nitride particles each having an aspect ratio of more than 5.0 and hexagonal boron nitride particles each having an aspect ratio of not more than 5.0.

The fact that the hexagonal boron nitride raw material powder contains such an aggregate can be checked with reference to an SEM image. Specifically, it can be said that, in a case where, in a 5000-fold SEM image of the hexagonal boron nitride raw material powder in which at least 300 hexagonal boron nitride particles are observed, aggregating particles, which are a plurality of hexagonal boron nitride particles that come together, are observed and at least one hexagonal boron nitride particle having an aspect ratio of more than 5.0 is present in the aggregating particles, the hexagonal boron nitride raw material powder contains the aggregate which contains the hexagonal boron nitride particles having an aspect ratio of more than 5.0.

The hexagonal boron nitride raw material powder used in the production method in accordance with an embodiment of the present invention contains the hexagonal boron nitride particles each having an aspect ratio of more than 5.0 at a proportion of preferably not less than 5% by number, more preferably not less than 8% by number, and still more preferably not less than 10% by number. This proportion is preferable because the aggregate, which causes deterioration in filling property, is likely to be formed and therefore an embodiment of the present invention brings about a great effect.

The hexagonal boron nitride raw material powder used in the production method in accordance with an embodiment of the present invention has a D90/D10 of preferably more than 3.0. Furthermore, a ratio (D50/$D_{BET}$) between a particle size ($D_{BET}$), which is calculated from a specific surface area, and D50 is preferably more than 4.5. A D90/D10 of more than 3.0 and a D50/$D_{BET}$ of more than 4.5 mean that a large number of aggregates are contained. Thus, it can be said that the disintegrating process in an embodiment of the present invention is highly effective in improving the filling property.

In an embodiment of the present invention, D10, D50, and D90 mean a cumulative 10% value (D10), a cumulative 50% value (D50), and a cumulative 90% value (D90), respectively, in a particle size distribution curve. Note that the particle size distribution curve is obtained as follows: (i) the powder to be subjected to measurement is dispersed in ethanol, (ii) a resultant mixture is subjected to an ultrasonic treatment, (iii) a volume-based particle size distribution is measured with use of a laser diffraction/scattering type particle size distribution measuring device, and then (iv) the particle size distribution curve is obtained from a result of the volume-based particle size distribution. The ultrasonic treatment is carried out as follows: 20 g of ethanol is added, as a dispersion medium, to a 50 mL screw top vial, 1 g of the powder to be subjected to the measurement is dispersed in the ethanol, and then the ultrasonic treatment is carried out at an amplitude of 40% for 20 minutes with use of an ultrasonic homogenizer in a state where a tip end is placed at 10 mm from a bottom surface of the screw top vial.

The specific surface area in an embodiment of the present invention is a BET specific surface area measured by a gas adsorption method. $D_{BET}$ is an indicator of a particle size of the primary particles. As D50/$D_{BET}$ becomes lower, a smaller number of aggregates are contained. Note that $D_{BET}$ is calculated by the following expression:

$$D_{BET} = 6/(\text{specific surface area} \times \text{density of hexagonal boron nitride}).$$

The density of hexagonal boron nitride is 2.1 g/cm$^3$.

A method of preparing the hexagonal boron nitride raw material powder used in the disintegrating process in an embodiment of the present invention is not particularly limited. A method which makes it possible to prepare the hexagonal boron nitride raw material powder which contains (i) the hexagonal boron nitride particles each having an aspect ratio of 1.5 to 5.0 and (ii) the aggregate that contains the hexagonal boron nitride particles each having an aspect ratio of more than 5.0 can be used without any particular limitation. For example, a method which includes steps of mixing a boron nitride powder and a lithium salt and heating a resultant mixture, as disclosed in Japanese Patent Application Publication Tokukai No. 2016-141600, can be used.

In the above method which includes the steps of mixing a boron nitride powder and a lithium salt and heating a resultant mixture, it is possible to obtain, by using the lithium salt as flux, hexagonal boron nitride particles each of which has grown in a direction of a c-axis, i.e., hexagonal boron nitride particles each having a low aspect ratio. In this method, it is difficult to prevent hexagonal boron nitride particles each having a high aspect ratio from being produced as a by-product. Thus, a hexagonal boron nitride raw material powder prepared by this method typically contains hexagonal boron nitride particles each having an aspect ratio of more than 5.0, and contains an aggregate which contains the hexagonal boron nitride particles each having an aspect ratio of more than 5.0.

In this method, a mixing ratio of the boron nitride powder and the lithium salt is not particularly limited, but the lithium salt is set to preferably not less than 0.15 mol and more preferably not less than 0.20 mol with respect to 1 mol of boron nitride because, by increasing a concentration of the lithium salt with respect to the boron nitride, it becomes easy to obtain hexagonal boron nitride particles each having a low aspect ratio. On the other hand, in consideration of industrial application of this method, the lithium salt is set to preferably not more than 0.50 mol and more preferably not more than 0.40 mol with respect to 1 mol of the boron nitride, from the viewpoint of handleability and costs. In a case where the lithium salt is reduced in an amount, hexagonal boron nitride particles each having a high aspect ratio are likely to be produced as a by-product. Accordingly, a problem with the present invention, i.e., deterioration in filling property due to an aggregate which contains hexagonal boron nitride particles each having a high aspect ratio becomes remarkable. As such, it is preferable to apply the method in accordance with an embodiment of the present invention to a hexagonal boron nitride raw material powder which is prepared by such a method and which contains (i) hexagonal boron nitride particles each having an aspect ratio of 1.5 to 5.0 and (ii) an aggregate that contains hexagonal boron nitride particles each having an aspect ratio of more than 5.0, because an effect of improving a filling property becomes remarkable. Thus, as the method of producing the hexagonal boron nitride raw material powder in an embodiment of the present invention, a preferred embodiment can be a production method which at least includes steps of (i) mixing a boron nitride powder and a lithium salt so that the lithium salt is not less than 0.15 mol and not more than 0.50 mol with respect to 1 mol of boron nitride and (ii) heating a resultant mixture. Furthermore, a preferred embodiment can be a method which includes applying the method in accordance with an embodiment of the present invention to a hexagonal boron nitride powder obtained by the above production method, i.e., a method of producing a hexagonal boron nitride powder which includes a disintegrating process of disintegrating, by a means which substantially does not involve pulverization of primary particles, the hexagonal boron nitride raw material powder can be a preferable embodiment.

The above production method preferably includes a lithium salt removing process after the heating step. The lithium salt removing process is a process of removing a residual raw material, such as the lithium salt which has adhered to hexagonal boron nitride, and a by-product(s), such as boric acid and/or a composite oxide of lithium and boron, by washing the hexagonal boron nitride with use of an acid. In the lithium salt removing process, a dilute acid such as hydrochloric acid is preferably used. A washing method is not particularly limited, and may be acid washing by showering, acid washing by soaking, or acid washing by stirring.

Note that the lithium salt removing process may be carried out before the disintegrating process in an embodiment of the present invention, may be carried out after the disintegrating process, or may be carried out both before and after the disintegrating process. In a case where the lithium salt removing process is not carried out before the disintegrating process, the disintegrating process is carried out in the presence of the lithium salt which has relatively high rigidity. This promotes disintegration of an aggregate. Therefore, it is possible to efficiently carry out the disintegrating process. In addition, since it is possible to carry out, as a single operation, an acid washing process (later described), which is carried out after the disintegration, and the lithium salt removing process of removing a residual raw material, such as the lithium salt which has adhered to hexagonal boron nitride, and a by-product(s), such as boric acid and/or a composite oxide of lithium and boron, it is possible to more efficiently produce a hexagonal boron nitride powder. For the above reasons, the method in which the disintegrating process is carried out before the lithium salt removing process is carried out can be a preferable method.

In a case where the disintegrating process is carried out before the lithium salt removing process is carried out, it is difficult to accurately measure physical properties, such as an aspect ratio, a specific surface area, and a particle size distribution, of the hexagonal boron nitride raw material powder. Therefore, in this case, the physical properties may be measured as follows: a part of the hexagonal boron nitride raw material powder which has not been subjected to the disintegrating process is taken out, the part is subjected to the lithium salt removing process, physical properties of the part are measured, and then the physical properties thus obtained are regarded as the physical properties of the hexagonal boron nitride raw material powder which has not been subjected to the disintegrating process.

In the above production method, a water washing process and/or a drying process may be carried out before the disintegrating process.

The water washing process is a process of washing the hexagonal boron nitride raw material powder with water for the purpose of removing an acid which has adhered to the hexagonal boron nitride raw material powder in the lithium salt removing process. A water washing method is not particularly limited, and may be water washing by showering or water washing by soaking, each of which is carried out after the hexagonal boron nitride raw material powder is filtered out.

The drying process is a process of drying the produced hexagonal boron nitride raw material powder. A drying method is not particularly limited, and may be high-temperature drying or vacuum drying.

In the disintegrating process in an embodiment of the present invention, that pulverization of the primary particles is not substantially involved can be confirmed by comparing (i) the specific surface area ($S_B$) of the hexagonal boron nitride raw material powder before the disintegrating process and (ii) the specific surface area ($S_A$) of the hexagonal boron nitride powder after the disintegrating process. That is, in a case where a ratio ($S_B/S_A$) between $S_B$ and $S_A$ is not less than 0.75, the primary particles are hardly pulverized in the disintegrating process, and it can be said that pulverization of the primary particles is not substantially involved. $S_B/S_A$ is more preferably not less than 0.80, and still more preferably not less than 0.90.

In an embodiment of the present invention, specific modes of carrying out disintegration substantially without pulverization of the primary particles include, for example, a mode in which a pulverizer (e.g., a jet mill), a planetary mill, or a grinder (e.g., a stone mill-type grinder) is used; and a mode in which the aggregate is disintegrated by collision between the particles or collision of the particles with a wall surface of a device during air transportation of the powder while the powder is caused to pass through an ejector or the like. Operational conditions under which such pulverizers or grinders are used may be adjusted, as appropriate, so that pulverization of the primary particles is not involved. Note that since the stone mill-type grinder is less likely to cause pulverization of the primary particles than the other devices and the operational conditions can be easily adjusted, the stone mill-type grinder can be a preferable method which makes it possible to easily carry out disintegration substantially without pulverization of the primary particles.

In the stone mill-type grinder, when the powder passes between rotating grindstones which are arranged one above the other, the powder is ground mainly by collision of the powder with itself. In a case where the stone mill-type grinder is used, the operational conditions such as a material of each of the grindstones, a size of each of the grindstones, a grindstone spacing, and a rotational speed may be adjusted as appropriate. Examples of the material of each of the grindstones include silicon carbide, silicon nitride, zirconia, alumina, diamond, and SUS. Alumina is particularly preferable because alumina is inexpensive and unlikely to cause pulverization of the primary particles of the hexagonal boron nitride particles. If the grindstone spacing is excessively wide, disintegration of the aggregating particles may become insufficient. If the grindstone spacing is excessively narrow, pulverization of the primary particles is likely to occur or the device is likely to be damaged. Therefore, it is preferable to set the grindstone spacing to 3 times to 20 times and preferably 4 times to 15 times D50 of the hexagonal boron nitride raw material powder. The size of each of the grindstones and the rotational speed may be adjusted as appropriate. The size of each of the grindstones may be set to, for example, a diameter of 150 mm to 500 mm. The rotational speed may be set to, for example, 1000 rpm to 3000 rpm. The disintegrating process which is carried out with use of the stone mill-type grinder may be carried out in a dry manner, i.e., in such a manner the hexagonal boron nitride raw material powder is fed to the device as a powder without being dispersed in a liquid such as water or may be alternatively carried out in a wet manner, i.e., in such a manner that the hexagonal boron nitride raw material powder is fed to the device as slurry while being dispersed in a liquid such as water. In a case where the disintegrating process is carried out in the dry manner, it is easy to handle the raw material. In a case where the disintegrating process is carried out in the wet manner, it is possible to suppress expansion of the grindstones due to heat, and therefore, even when the device is operated continuously for a long time, the grindstone spacing is easily prevented from unintentionally becoming excessively narrow. The dry manner and the wet manner have advantages as described above, and may be selected, as appropriate, depending on a situation.

In an embodiment of the present invention, after the disintegrating process, a process(es) such as the acid washing process, a water washing process, a drying process, and/or a classifying process may be carried out.

The acid washing process is a process aimed at removing, with use of an acid, impurities generated in the disintegrating process. An operation may be carried out in the same manner as in the lithium salt removing process. Note that the acid washing process and the lithium salt removing process may be carried out at the same time, i.e., the acid washing process may be carried out as an acid washing process which also serves as the lithium salt removing process.

The water washing process is a process of washing the hexagonal boron nitride powder with water for the purpose of removing the acid which has adhered to the hexagonal boron nitride powder in the acid washing process. A water washing method is not particularly limited, and may be water washing by showering or water washing by soaking, each of which is carried out after the hexagonal boron nitride powder is filtered out.

The drying process is a process of drying the produced hexagonal boron nitride powder. A drying method is not particularly limited, and may be high-temperature drying or vacuum drying.

The classifying process is a process of classifying the hexagonal boron nitride powder according to sizes of the particles, shapes of the particles, and/or the like. A classifying operation may be, for example, sieving, a method in which slurry in which the hexagonal boron nitride particles are dispersed is caused to pass through a filter, wet classification, or airflow classification.

<Hexagonal boron nitride powder>

The present invention provides a hexagonal boron nitride powder which can be produced by the above method of producing a hexagonal boron nitride powder and which exhibits a high filling property even in a case where the hexagonal boron nitride powder contains, together with hexagonal boron nitride particles each having a low aspect ratio, hexagonal boron nitride particles each having a high aspect ratio, which form a relatively large aggregate that causes deterioration in filling property with respect to a resin.

That is, the present invention provides a hexagonal boron nitride powder which contains, at a proportion of not less than 20% by number, hexagonal boron nitride particles each having an aspect ratio of 1.5 to 5.0 and which has a D50 of 0.2 $\mu$m to 10.0 $\mu$m and a D90/D10 of not more than 3.0.

Such a hexagonal boron nitride powder contains hexagonal boron nitride particles each having a low aspect ratio, and contains a small number of large aggregates which cause deterioration in filling property with respect to a resin. Thus, the hexagonal boron nitride powder has a high filling property with respect to a resin, and furthermore makes it possible to reduce thermal conduction anisotropy of a resin composition which is obtained by filling a resin with the hexagonal boron nitride powder.

The hexagonal boron nitride powder in accordance with an embodiment of the present invention contains, at a proportion of not less than 20% by number, the hexagonal boron nitride particles each having an aspect ratio of 1.5 to 5.0. Since the hexagonal boron nitride particles each having an aspect ratio of 1.5 to 5.0, i.e., a low aspect ratio are contained at a proportion of not less than 20% by number, it is possible to reduce thermal conduction anisotropy and sufficiently increase a thermal conductivity of, for example, a resin sheet in a thickness direction. As the hexagonal boron nitride particles each having a low aspect ratio are contained more, it becomes easier to reduce the thermal conduction anisotropy. Therefore, the hexagonal boron nitride particles each having a low aspect ratio are contained at a proportion of preferably not less than 40% by number and more preferably not less than 50% by number.

In the hexagonal boron nitride powder in accordance with an embodiment of the present invention, an upper limit of the proportion of the hexagonal boron nitride particles each having an aspect ratio of 1.5 to 5.0 is not particularly limited, and the proportion is generally not more than 95% by number and particularly not more than 80% by number.

Generally, hexagonal boron nitride particles each having an aspect ratio of more than 5.0, i.e., a high aspect ratio are contained at a proportion of not less than 5% by number, particularly not less than 8% by number, and even not less than 20% by number. Such boron nitride particles each having a high aspect ratio are likely to form an aggregate, and the aggregate formed by such boron nitride particles is a main cause of deterioration in filling property.

The hexagonal boron nitride powder in accordance with an embodiment of the present invention has a D90/D10 of not more than 3.0. As a value of D90/D10 becomes lower, a sharper particle size distribution is obtained. As the value of D90/D10 becomes higher, a broader particle size distribution is obtained. That is, the hexagonal boron nitride powder in accordance with an embodiment of the present invention has a sharp particle size distribution.

It can be said that a hexagonal boron nitride powder having a broad particle size distribution contains aggregating coarse particles. As has been described, hexagonal boron nitride particles form, due to their shapes, an aggregate which has a gap between the particles. It is difficult for a resin to enter the gap between the particles. Therefore, it is difficult for a hexagonal boron nitride powder in which a large number of aggregates are present to achieve a high filling property. The hexagonal boron nitride powder in accordance with an embodiment of the present invention has a sharp particle size distribution. As such, the hexagonal boron nitride powder contains a small number of aggregates as described above, and exhibits a high filling property. Note that, as has been described, D10, D50, and D90 are measured after a powder to be subjected to measurement is dispersed in ethanol and then a resultant mixture is subjected to an ultrasonic treatment. During the measurement, some aggregates are broken. However, by measuring D90/D10 of the hexagonal boron nitride powder which has been subjected to an ultrasonic treatment under given conditions, it is possible to evaluate a state of aggregates which affect a filling property.

Since the hexagonal boron nitride powder comes to have a smaller number of aggregates and have a higher filling property as D90/D10 of the hexagonal boron nitride powder becomes lower, D90/D10 is more preferably not more than 2.7, and still more preferably not more than 2.5. A lower limit of D90/D10 is not particularly limited, provided that the lower limit is not less than 1.0. However, in a case where D90/D10 is low, it is necessary to highly control a particle size and generation of an aggregate, and accordingly it is difficult to produce the hexagonal boron nitride powder. Therefore, D90/D10 is preferably not less than 1.2, and more preferably not less than 1.5.

The hexagonal boron nitride powder in accordance with an embodiment of the present invention has a D50 of 0.2 $\mu$m to 10.0 $\mu$m, and more preferably 1.0 $\mu$m to 5.0 $\mu$m. This makes it easy to use the hexagonal boron nitride powder as a thermal conductive filler for heat releasing members. In other words, in a case where D50 is low, the powder is likely to fly and accordingly handleability becomes poor. Furthermore, a viscosity is likely to increase when a resin is filled with the powder, and accordingly efficiency of a filling operation decreases. In a case where D50 is high, unevenness is likely to occur on a surface of a resin composition, and such a resin composition may be difficult to be used for a thin resin sheet.

D10 of the hexagonal boron nitride powder in accordance with an embodiment of the present invention is preferably not less than 1.5 $\mu$m and more preferably not less than 1.8 $\mu$m, because in a case where D10 is excessively low, the viscosity is likely to increase when a resin is filled with the hexagonal boron nitride powder due to presence of a fine powder. D90 is preferably not more than 10.0 $\mu$m, and more preferably not more than 7.5 $\mu$m, because in a case where D90 is excessively high, unevenness is likely to occur on a surface of a resin composition, and such a resin composition may be difficult to be used for a thin resin sheet.

The hexagonal boron nitride powder in accordance with an embodiment of the present invention has a specific surface area falling within a range of preferably 1.5 $m^2$/g to 4.0 $m^2$/g. In a case where the specific surface area falls within the above range, it is easy to achieve a high filling property while having low thermal conduction anisotropy. Furthermore, a ratio (D50/$D_{BET}$) between a particle size ($D_{BET}$), which is calculated from the specific surface area, and D50 is preferably not more than 4.5 and more preferably not more than 4.0.

Since the hexagonal boron nitride powder in accordance with an embodiment of the present invention has the above features, it is possible to reduce a viscosity of a resin which is filled with the hexagonal boron nitride powder (filled resin viscosity). For example, in a case where a silicone resin (CY52-276A, manufactured by Dow Toray Co., Ltd.) is filled with 20% by volume of the hexagonal boron nitride powder, it is possible to cause a filled resin viscosity, which is a viscosity at a measurement temperature of 25°C and a shear rate of 1/s, to be not more than 130 Pa·s and further to not more than 125 mPa·s. It can be said that a filled resin viscosity of not more than 130 Pa s indicates that the hexagonal boron nitride powder has a high filling property, and it is possible to fill a resin with the hexagonal boron nitride powder with high density. Furthermore, the resin has good flowability, and accordingly has good handleability. This makes it easily to prepare, for example, a resin sheet.

Furthermore, the hexagonal boron nitride powder in accordance with an embodiment of the present invention can have a feature such that a DBP absorption rate (mL/100 g) is not more than 80 mL/100 g, in particular not more than 75 mL/100 g, and even not more than 70 mL/100 g. Note that the DBP absorption rate is calculated from a torque (vertical axis, N·m)-versus-DBP dropping amount (horizontal axis, mL) curve which is obtained in accordance with JIS-K-6217-4:2017. Such a low DBP absorption rate means that the filling property with respect to a resin is high.

<Resin composition>

A resin composition in accordance with an embodiment of the present invention contains the above hexagonal boron nitride powder and a resin. The resin composition contains, in a certain amount or more, hexagonal boron nitride particles each having a low aspect ratio, as described above, and therefore has low thermal conduction anisotropy. Furthermore, since the resin is filled with the hexagonal boron nitride powder, which has a high filling property, a viscosity of the resin composition is unlikely to increase, and the resin composition has good handleability. Therefore, it is easy to prepare a resin sheet, for example. A method of preparing the resin composition is not particularly limited, and the resin composition can be prepared by a publicly known preparing method.

The resin is not particularly limited, and can be, for example, a silicone-based resin or an epoxy-based resin. Examples of an epoxy resin include bisphenol A type epoxy resin, bisphenol S type epoxy resin, bisphenol F type epoxy resin, hydrogenated bisphenol A type epoxy resin, polypropylene glycol type epoxy resin, polytetramethylene glycol type epoxy resin, naphthalene type epoxy resin, phenylmethane type epoxy resin, tetrakis phenol methane type epoxy resin, biphenyl type epoxy resin, epoxy resin having a triazine nucleus in a skeleton, bisphenol A alkylene oxide adduct type epoxy resin, bisphenol AF type epoxy resin, phenol novolac type epoxy resin, tert-butyl-catechol type epoxy resin, naphthol type epoxy resin, naphthylene ether type epoxy resin, glycidyl amine type epoxy resin, glycidyl ester type epoxy resin, cresol novolac type epoxy resin, anthracene type epoxy resin, linear aliphatic epoxy resin, epoxy resin having a butadiene structure, alicyclic epoxy resin, heterocyclic epoxy resin, spiro ring-containing epoxy resin, cyclohexane dimethanol type epoxy resin, trimethylol type epoxy resin, and halogenated epoxy resin. Each of these epoxy resins may be used alone or more or more of these epoxy resins may be used in combination.

As a curing agent for the epoxy resin, an active ester compound containing a naphthalene structure may be used. The active ester compound containing a naphthalene structure is not particularly limited, provided that the active ester compound has a naphthalene structure and an aryl carbonyloxy group. However, the active ester compound which has a polynaphthylene oxide structure and an aryl carbonyloxy group is preferable, and the active ester compound in which an aryl carbonyloxy group bonds to a naphthalene nucleus of a polynaphthylene oxide structure is more preferable. The polynaphthylene oxide structure may be a C1-C4 alkyl group substituted polynaphthylene oxide structure. Furthermore, the polynaphthylene oxide structure may have a polyphenylene oxide structure.

As another curing agent for the epoxy resin, an amine-based resin, an acid anhydride-based resin, a phenolic resin, imidazole, a benzoxazine-based resin, a cyanate ester-based resin, or the like may be used. Each of these curing agents may also be used alone or two or more of these curing agents may be used in combination. Each or two or more of these curing agents are blended with the epoxy resin in an amount of 0.5 equivalents to 1.5 equivalents, and preferably 0.7 equivalents to 1.3 equivalents, in terms of an equivalent ratio with respect to the epoxy resin. In this specification, these curing agents are also encompassed in the resin.

As the silicone-based resin, a known curable silicone resin which is a mixture of an addition reaction type silicone resin and a silicone-based crosslinking agent can be used without limitation. Examples of the addition reaction type silicone resin include polyorganosiloxanes each having an alkenyl group (e.g., a vinyl group or a hexenyl group) as a functional group in a molecule, such as polydimethylsiloxane. Examples of the silicone-based crosslinking agent include polyorganosiloxanes each having a silicon atom-bonded hydrogen atom, such as a dimethyl siloxane-methyl hydrogen siloxane copolymer having a blocked terminal dimethyl hydrogen siloxy group, a dimethyl siloxane-methyl hydrogen siloxane copolymer having a blocked terminal trimethyl siloxy group, poly(methyl hydrogen siloxane) having a blocked terminal trimethyl siloxane group, and poly(hydrogen silsesquioxane). Further, as a curing catalyst, a known platinum-based catalyst or the like which is used to cure a silicone resin can be used without limitation. Examples of the curing catalyst include fine-particulate platinum, fine-particulate platinum supported on carbon powder, chloroplatinic acid, alcohol-modified chloroplatinic acid, olefin complexes of chloroplatinic acid, palladium, and rhodium catalysts.

The resin may further include a thermoplastic resin. The thermoplastic resin makes it possible to improve mechanical strength of a cured resin product, and further makes it possible to improve a film molding ability when the resin composition is used in the form of an adhesive film. Examples of the thermoplastic resin include phenoxy resin, polyvinyl acetal resin, polyimide resin, polyamide imide resin, polyether imide resin, polysulfone resin, polyether sulfone resin, polyphenylene ether resin, polycarbonate resin, polyether ether ketone resin, and polyester resin. In particular, phenoxy resin and polyvinyl acetal resin are preferable. In this specification, these thermoplastic resins are also encompassed in the resin.

A blending ratio between the resin and the hexagonal boron nitride powder in the resin composition in accordance with an embodiment of the present invention may be determined as appropriate depending on an application. For example, the above-described hexagonal boron nitride powder may be blended at a proportion of preferably 30% by volume to 90% by volume, more preferably 40% by volume to 80% by volume, and still more preferably 50% by volume to 70% by volume, with respect to the entire resin composition.

The resin composition may contain a component other than hexagonal boron nitride and the resin. The resin composition may contain as appropriate, for example, an inorganic filler, a curing accelerator, a discoloration inhibitor, a surfactant, a dispersant, a coupling agent, a colorant, a plasticizer, a viscosity modifier, an antimicrobial agent, and/or the like, provided that the effect of the present invention is not affected.

Examples of the curing accelerator include organic phosphine compounds, imidazole compounds, amine adduct compounds, amine compounds, organometallic complexes, and organometallic salts. Each of these curing accelerators may be used alone or two or more of these curing accelerators may be used in combination.

Examples of applications of the resin composition in accordance with an embodiment of the present invention include: adhesive films; sheet-like laminate materials (resin sheets) such as a prepreg; circuit boards (laminates and multi-layer printed wiring boards); solder masks; underfill materials; thermal adhesives; die bonding materials; semiconductor sealing materials; hole filling resins; component filling resins; thermal interface materials (sheets, gel, grease, and the like); substrates for power modules; and heat releasing members for electronic components.

A sheet-like laminate material (resin sheet) can also be used as an insulating layer of a multi-layer printed wiring board. In order that a build-up layer of a multi-layer printed wiring board is more multilayered and densified, nonelectrolytic plating is carried out after a roughening treatment or nonelectrolytic plating and electrolytic plating are carried out, with respect to a surface of an insulating layer of the multi-layer printed wiring board, so as to form a conductor layer. As such a sheet-like laminate material, the resin composition which contains, as the resin, at least (i) an epoxy resin and (ii) an active ester compound containing a naphthalene structure is, for example, preferable.

It is considered that the active ester compound containing a naphthalene structure not only has a function as a curing agent for the epoxy resin but also contributes to formation of fine unevenness, which is good in adhesion to a plated layer, on a surface of a cured resin product when the surface is subjected to a roughening treatment. Note that the cured resin product is a product obtained by curing the resin composition. Therefore, this resin composition exhibits a low dielectric dissipation factor and forms a roughened surface excellent in adhesion to the plated layer. Thus, the resin composition results in an interlayer insulating sheet which forms an insulating layer that has, in a balanced manner, properties that can deal with multilayering and densification of a build-up layer of a multi-layer printed wiring board. Furthermore, since this resin composition contains the hexagonal boron nitride powder, it is possible to realize an interlayer insulating sheet having a sufficiently high thermal conductivity.

Examples

The present invention will be described below in detail with reference to Examples. Note, however, that the present invention is not limited to such Examples. Test methods are as follows.

<Disintegration with use of stone mill-type grinder>

A hexagonal boron nitride raw material powder was disintegrated with use of a stone mill-type grinder (Supermasscolloider MKCA6-5J, manufactured by MASUKO SANGYO CO., LTD., material of grindstones: alumina, diameter of grindstones: 150 mm). This disintegration was carried out in a dry manner at a given rotational speed with a given grindstone spacing. Thereafter, washing with dilute hydrochloric acid was carried out as the acid washing process to obtain a hexagonal boron nitride powder.

<Measurement of aspect ratio>

A 5000-fold scanning electron microscope image of the hexagonal boron nitride raw material powder or the hexagonal boron nitride powder was obtained with use of an FE-SEM (S5500, manufactured by Hitachi High-Technologies Corporation). A length (L) of a hexagonal boron nitride particle in a width direction and a length (t) of the hexagonal boron nitride particle in a thickness direction were measured from the obtained from the obtained scanning electron microscope image, and then an aspect ratio (L/t) of the particle was calculated. In this manner, aspect ratios of randomly extracted 300 particles were calculated. From obtained results, a proportion of hexagonal boron nitride particles each having an aspect ratio of 1.5 to 5.0 was calculated. Note that, in measurement with respect to the hexagonal boron nitride raw material powder which was to be disintegrated with use of the stone mill-type grinder, in a case where the lithium salt removing process had not been carried out during a process of preparing the hexagonal boron nitride raw material powder, a part of a sample was taken out and washed with dilute hydrochloric acid, and then the above measurement of aspect ratios was carried out. Further, the image used for the measurement of aspect ratios was observed to evaluate whether or not an aggregate which contained hexagonal boron nitride particles each having an aspect ratio of more than 5.0 was contained in the hexagonal boron nitride raw material powder.

<Measurement of D10, D50, and D90>

Particle size distributions of the hexagonal boron nitride raw material powder and the hexagonal boron nitride powder were measured with use of a laser diffraction/scattering type particle size distribution measuring device (MT3000, manufactured by Nikkiso Co., Ltd.), and D10, D50, and D90 were calculated from obtained results. Note that each measurement sample was prepared by the following method. First, 20 g of ethanol was added, as a dispersion medium, to a 50 mL screw top vial, and 1 g of the powder to be subjected to measurement was dispersed in the ethanol. Subsequently, an ultrasonic treatment was carried out at an amplitude of 40% for 20 minutes with use of an ultrasonic homogenizer (SONIFIER SFX250, manufactured by BRANSON) in a state where a tip end was placed at 10 mm from a bottom surface of the screw top vial. Thereafter, a particle size distribution of the measurement sample which had been subjected to the ultrasonic treatment was measured. Note that, in measurement with respect to the hexagonal boron nitride raw material powder which was to be disintegrated with use of the stone mill-type grinder, in a case where the lithium salt removing process had not been carried out during the process of preparing the hexagonal boron nitride raw material powder, a part of the sample was taken out and washed with dilute hydrochloric acid, and then the above measurement of D10, D50, and D90 was carried out.

<Measurement of specific surface area>

A specific surface area was measured with use of a BET specific surface area meter (Macsorb HM model-1201, manufactured by Mountech Co., Ltd.). Note that, in measurement with respect to the hexagonal boron nitride raw material powder which was to be disintegrated with use of the stone mill-type grinder, in a case where the lithium salt removing process had not been carried out during the process of preparing the hexagonal boron nitride raw material powder, a part of the sample was taken out and washed with dilute hydrochloric acid, and then the above measurement of a specific surface area was carried out.

<Measurement of filled resin viscosity>

A resin composition was prepared by filling a silicone resin (CY52-276A, manufactured by Dow Toray Co., Ltd.) with 20% by volume of the hexagonal boron nitride powder, and a viscosity of the resin composition at a measurement temperature of 25°C and a shear rate of 1/s was measured with use of a rheometer (AR2000ex, manufactured by TA Instruments). This viscosity was regarded as a filled resin viscosity.

<Measurement of plane orientation index>

As a base resin, a mixture of 100 parts by weight of an epoxy resin (JER806, manufactured by Mitsubishi Chemical Corporation) and 28 parts by weight of a curing agent (alicyclic polyamine-based curing agent, JERCure 113, manufactured by Mitsubishi Chemical Corporation) was prepared. Subsequently, 40% by volume of the base resin and 60% by volume of the hexagonal boron nitride powder were mixed in methyl ethyl ketone serving as a solvent, and then the solvent was dried to obtain a resin composition. Thereafter, the resin composition which had been dried was poured into a mold, and cured with use of a hot press under conditions of a temperature of 150°C, a pressure of 5 MPa, and a retention time of 1 hour to prepare a sheet having a diameter of 10 mm and a thickness of 0.15 mm. The obtained resin sheet was subjected to XRD measurement with use of a fully-automated horizontal multipurpose X-ray diffractometer (SmartLab, manufactured by Rigaku Corporation). In the XRD measurement, the resin sheet was irradiated with X-rays so that the X-rays were parallel to a thickness direction of the resin sheet. From a peak area ($I_{002}$) of a 002 plane and a peak area ($I_{100}$) of a 100 plane, which peak areas were derived from the obtained hexagonal boron nitride primary particles, a plane orientation index of the resin composition was calculated with use of the following expression:

$$\text{Plane orientation index} = \log((I_{002}/I_{100})/6.67).$$

The measurement was carried out at a scan speed of 20 degrees/min, a step width of 0.02 degrees, and a scan range of 10 degrees to 90 degrees. Note that, as the plane orientation index becomes closer to 0, the hexagonal boron nitride particles become less oriented and thermal conduction anisotropy becomes lower.

<Example 1>

First, 500 g (20.1 mol) of commercially available hexagonal boron nitride and 500 g (6.8 mol) of a lithium carbonate powder were introduced into a crucible, and then heat treated at 1400°C for 5 hours under a nitrogen flow. After a sample thus obtained was cooled, the sample was washed with dilute hydrochloric acid, as the lithium salt removing process, so that flux was dissolved and removed. Then, filtration, water washing, and drying were carried out to obtain a hexagonal boron nitride raw material powder. Subsequently, 150 g of the obtained hexagonal boron nitride raw material powder which contained (i) hexagonal boron nitride particles each having an aspect ratio of 1.5 to 5.0 and (ii) an aggregate that contained hexagonal boron nitride particles each having an aspect ratio of more than 5.0 was disintegrated with use of the stone mill-type grinder at a rotational speed of 2200 rpm with a grindstone spacing of 20 $\mu$m to obtain a hexagonal boron nitride powder. A proportion of the hexagonal boron nitride particles which were contained in the obtained hexagonal boron nitride powder and each of which had an aspect ratio of 1.5 to 5.0 was measured. A specific surface area, D10, D50, and D90 of the hexagonal boron nitride powder were also measured. Further, a filled resin viscosity was measured. Next, a resin composition was prepared with use of the obtained boron nitride powder, and a thermal conductivity and a plane orientation index of the resin composition were measured. Physical properties of the hexagonal boron nitride raw material powder and conditions of the disintegrating process are shown in Table 1. Results of evaluation of the obtained hexagonal boron nitride powder are shown in Table 2. Results of evaluation of the resin composition are shown in Table 3.

<Examples 2 and 3 and Comparative Example 2>

A hexagonal boron nitride powder and a resin composition were obtained in the same manner as in Example 1, except that the conditions of the disintegrating process carried out with use of the stone mill-type grinder were changed as shown in Table 1. Then, physical properties of the hexagonal boron nitride powder and the resin composition were evaluated. Results of evaluation are shown in Tables 2 and 3.

<Example 4>

First, 500 g (20.1 mol) of commercially available hexagonal boron nitride and 500 g (6.8 mol) of a lithium carbonate powder were introduced into a crucible, and then heat treated at 1400°C for 5 hours under a nitrogen flow. After a sample thus obtained was cooled, the lithium salt removing process was not carried out. Then, 150 g of an obtained hexagonal boron nitride raw material powder in which a lithium salt was present was disintegrated with use of the stone mill-type grinder at a rotational speed of 2200 rpm with a grindstone spacing of 20 $\mu$m to obtain a hexagonal boron nitride powder. Physical properties of the obtained hexagonal boron nitride powder were evaluated in the same manner as in Example 1. Further, in the same manner as in Example 1, the hexagonal boron nitride powder and a resin composition were obtained, and physical properties of the hexagonal boron nitride powder and the resin composition were evaluated. Physical properties of the hexagonal boron nitride raw material powder and conditions of the disintegrating process are shown in Table 1. Results of evaluation of the obtained hexagonal boron nitride powder are shown in Table 2. Results of evaluation of the resin composition are shown in Table 3.

<Comparative Example 1>

A resin composition was prepared with use of the hexagonal boron nitride raw material powder which was prepared in Example 1 and which had not been subjected to the disintegrating process. A thermal conductivity of the resin composition was evaluated. Physical properties of a hexagonal boron nitride powder are shown in Table 2. Results of evaluation of the resin composition are shown in Table 3.

[Table 1]

| | Physical properties of hexagonal boron nitride raw material powder | | | | | | | | | Conditions of disintegrating process | | Ratio between specific surface areas before and after disintegration $(S_B/S_A)$ |
|---|---|---|---|---|---|---|---|---|---|---|---|---|
| | Proportion of hexagonal boron nitride particles each having an aspect ratio of 1.5 to 5.0 [%] | D10 [$\mu$m] | D50 [$\mu$m] | D90 [$\mu$m] | D90/D10 | Specific surface area [m$^2$/g] | $D_{BET}$ [$\mu$m] | $D50/D_{BET}$ | Lithium salt removing process | Grindstone spacing [$\mu$m] | Rotational speed [rpm] | |
| Example 1 | 56 | 2.3 | 4.2 | 7.8 | 3.4 | 3.17 | 0.9 | 4.7 | Y | 20 | 2200 | 1.01 |
| Example 2 | 56 | 2.3 | 4.2 | 7.8 | 3.4 | 3.17 | 0.9 | 4.7 | Y | 40 | 2200 | 1.02 |
| Example 3 | 56 | 2.3 | 4.2 | 7.8 | 3.4 | 3.17 | 0.9 | 4.7 | Y | 15 | 2400 | 0.76 |
| Example 4 | 56 | 2.3 | 4.2 | 7.8 | 3.4 | 3.17 | 0.9 | 4.7 | N | 20 | 2200 | 0.80 |
| Comparative Example 1 | No disintegrating process | | | | | | | | | | | |
| Comparative Example 2 | 56 | 2.3 | 4.2 | 7.8 | 3.4 | 3.17 | 0.9 | 4.7 | Y | 10 | 2200 | 0.64 |

[Table 2]

| | Physical properties of hexagonal boron nitride powder | | | | | | | | | |
|---|---|---|---|---|---|---|---|---|---|---|
| | Proportion of hexagonal boron nitride particles each having an aspect ratio of 1.5 to 5.0 [%] | D10 [$\mu$m] | D50 [$\mu$m] | D90 [$\mu$m] | D90/D10 | Specific surface area [m$^2$/g] | $D_{BET}$ [$\mu$m] | D50/$D_{BET}$ | Filled resin viscosity [Pa·s] | DBP absorption rate [mL/100 g] |
| Example 1 | 56 | 2.1 | 3.4 | 5.4 | 2.6 | 3.13 | 0.9 | 3.7 | 133 | 77.4 |
| Example 2 | 56 | 2.2 | 3.6 | 6.1 | 2.8 | 3.11 | 0.9 | 3.9 | 155 | 79.1 |
| Example 3 | 53 | 1.5 | 2.7 | 4.0 | 2.7 | 4.17 | 0.7 | 3.9 | 136 | 77.7 |
| Example 4 | 56 | 1.9 | 2.9 | 4.6 | 2.4 | 3.97 | 0.7 | 4.0 | 117 | 67.7 |
| Comparative Example 1 | 55 | 2.3 | 4.2 | 7.8 | 3.4 | 3.17 | 0.9 | 4.7 | 268 | 83.3 |
| Comparative Example 2 | 38 | 1.1 | 2.2 | 3.2 | 2.9 | 4.92 | 0.6 | 3.8 | 162 | 80.4 |

[Table 3]

|  | Plane orientation index |
| --- | --- |
| Example 1 | 0.6 |
| Example 2 | 0.7 |
| Example 3 | 0.9 |
| Example 4 | 0.6 |
| Comparative Example 1 | 0.7 |
| Comparative Example 2 | 1.1 |

As is clear from Tables 1 and 2, aggregates which contained the hexagonal boron nitride particles each having an aspect ratio of more than 5.0 were observed in all of the hexagonal boron nitride raw material powders. In addition, no hexagonal boron nitride particles each having an aspect ratio of less than 1.5 were observed in any of the hexagonal boron nitride raw material powders and the hexagonal boron nitride powders. In a lithium salt removing step column of Table 1, "Y" was put for the hexagonal boron nitride raw material powders which had been subjected to the lithium salt removing step before the disintegrating process, and "N" was put for the hexagonal boron nitride raw material powder which had been subjected to the disintegrating process without the lithium salt removing step.

With regard to the results of the evaluation, all of the hexagonal boron nitride powders of Examples 1 to 4, in which the disintegrating process in an embodiment of the present invention had been carried out, had lower resin viscosities and lower DBP absorption rates, and had improved filling properties with respect to the resins, as compared with the hexagonal boron nitride powder of Comparative Example 1, in which the disintegrating process had not been carried out, and the hexagonal boron nitride powder of Comparative Example 2, in which pulverization of the primary particles was involved in the disintegrating process.

Further, in Examples 1 to 4, there was almost no change in proportion of the hexagonal boron nitride particles each having an aspect ratio of 1.5 to 5.0 before and after the disintegrating process, and the plane orientation indexes were also close to 0. In contrast, in Comparative Example 2, in which $S_B/S_A$ was less than 0.75 and pulverization of the primary particles was involved in the disintegrating process, the proportion of the hexagonal boron nitride particles each having an aspect ratio of 1.5 to 5.0 was decreased, and the plane orientation index was away from 0. Thus, it was shown that, by disintegration which does not involve pulverization of primary particles, it is possible to obtain a hexagonal boron nitride powder which has low thermal conduction anisotropy and a high filling property.

<Evaluation of forming of resin composition into sheet>

Each of the hexagonal boron nitride powders of Examples 1 to 4 was mixed with a base resin to prepare a sheet-like adhesive film, which is a resin composition, and whether the adhesive film was formed successfully as a sheet or not was evaluated. As the base resin, five kinds of resins A to E were used.

Table 4 shows composition of the resin A. First, 15 parts by mass of a liquid bisphenol A type epoxy resin (epoxy equivalent: 180, "828US" manufactured by Mitsubishi Chemical Corporation) and 15 parts by mass of a biphenyl type epoxy resin (epoxy equivalent: 291, "NC3000H" manufactured by Nippon Kayaku Co., Ltd.) were added to a mixed solution of 15 parts by mass of methyl ethyl ketone (hereinafter referred to as "MEK") and 15 parts by mass of cyclohexanone, and dissolved by heating while the mixed solution was stirred. In this manner, a mixed solution A was obtained. Subsequently, the mixed solution A after dissolution was mixed with 43 parts by mass of a naphthalene type active ester compound ("EXB9411-65BK" manufactured by DIC Corporation, active ester equivalent: 272, a toluene solution having a solid content of 65%), 0.15 parts by mass of a curing accelerator (manufactured by KOEI CHEMICAL COMPANY, LIMITED, "4-dimethylaminopyridine"), and 15 parts by mass of a phenoxy resin (YL6954BH30, an MEK solution having a solid content of 30% by mass, weight-average molecular weight: 40000). A resultant mixture was regarded as the resin A.

[Table 4]

| Composition of resin A |  | Parts by mass |
| --- | --- | --- |
| Liquid bisphenol A type epoxy resin | 828US | 15 |
| Biphenyl type epoxy resin | NC3000H | 15 |
| Methyl ethyl ketone |  | 15 |

(continued)

| Composition of resin A | | Parts by mass |
|---|---|---|
| Cyclohexanone | | 15 |
| Naphthalene type active ester compound | EXB9411-65BK | 43 |
| Curing accelerator (4-dimethylaminopyridine) | DMAP | 0.15 |
| Phenoxy resin | YL6954BH30 | 15 |

Table 5 shows composition of the resin B. First, 15 parts by mass of a liquid bisphenol A type epoxy resin ("828US" manufactured by Mitsubishi Chemical Corporation, epoxy equivalent: 190) and 15 parts by mass of a biphenyl aralkyl type epoxy resin (epoxy equivalent: 291, "NC3000H" manufactured by Nippon Kayaku Co., Ltd.) were added to a mixed solution of 5 parts by mass of MEK and 5 parts by mass of cyclohexanone, and dissolved by heating while stirring was carried out. In this manner, a mixed solution B was obtained. Subsequently, the mixed solution B after dissolution was mixed with 25 parts by mass of a solution obtained by dissolving a triazine structure-containing active ester compound ("EXB9510" manufactured by DIC Corporation, active ester equivalent: 214) in MEK so that a non-volatile content became 60%, 0.1 parts by mass of a curing accelerator (manufactured by KOEI CHEMICAL COMPANY, LIMITED, "4-dimethylaminopyridine"), and 15 parts by mass of a phenoxy resin (YX6954BH30, an MEK and cyclohexanone solution having a solid content of 30% by mass, weight-average molecular weight: 35000). A resultant mixture was regarded as the resin B.

[Table 5]

| Composition of resin B | | Parts by mass |
|---|---|---|
| Liquid bisphenol A type epoxy resin | 828US | 15 |
| Biphenyl type epoxy resin | NC3000H | 15 |
| Methyl ethyl ketone | | 5 |
| Cyclohexanone | | 5 |
| Triazine structure-containing active ester compound | EXB9510 | 25 |
| Curing accelerator (4-dimethylaminopyridine) | DMAP | 0.1 |
| Phenoxy resin | YX6954BH30 | 15 |

Table 6 shows composition of the resin C. First, 10 parts by mass of a bisphenol type epoxy resin ("ZX1059" manufactured by NIPPON STEEL Chemical Co., Ltd., a mixture containing a bisphenol A type epoxy resin and a bisphenol F type epoxy resin at 1:1, epoxy equivalent: 169), 10 parts by mass of a crystalline bifunctional epoxy resin ("YX4000HK" manufactured by Mitsubishi Chemical Corporation, epoxy equivalent: 185), and 20 parts by mass of a dicyclopentadiene type epoxy resin ("HP-7200H" manufactured by DIC Corporation, epoxy equivalent: 275) were dissolved in 40 parts by mass of solvent naphtha by heating while stirring was carried out. In this manner, a mixed solution C was obtained.

Next, an epoxy resin A was synthesized. Table 7 shows composition of the epoxy resin A. First, 222 g of a bixylenol type epoxy resin (YX4000 manufactured by Mitsubishi Chemical Corporation, epoxy equivalent: 185), 15 g of bisphenol acetophenone (phenolic hydroxyl equivalent: 145), 170 g of biscresol fluorene (manufactured by JFE Chemical Corporation, phenolic hydroxyl equivalent: 190), and 150 g of cyclohexanone were introduced into a reaction vessel, and dissolved by stirring. Subsequently, 0.5 g of a tetramethylammonium chloride solution was added dropwise. A resultant mixture was reacted under a nitrogen atmosphere, and a reaction product was diluted with a solvent to obtain the epoxy resin A.

Thereafter, the mixed solution C which had been cooled to room temperature (25°C), 12 parts by mass of the epoxy resin A, 12 parts by mass of a triazine skeleton-containing phenol resin (curing agent, "LA-7054" manufactured by DIC Corporation, an MEK solution having a hydroxyl equivalent of 125 and a solid content of 60%), 15 parts by mass of a naphthalene type curing agent ("SN-485" manufactured by NIPPON STEEL Chemical Co., Ltd., an MEK solution having a hydroxyl equivalent of 215 and a solid content of 60%), 3 parts by mass of a curing accelerator (4-dimethylaminopyridine, an MEK solution having a solid content of 2% by mass), and 2 parts by mass of a flame retardant ("HCA-HQ" manufactured by SANKO CO., LTD., 10-(2,5-dihydroxyphenyl)-10-hydro-9-oxa-10-phosphaphenanthrene-10-oxide, average particle size of 2 μm) were mixed. A resultant mixture was regarded as the resin C.

[Table 6]

| Composition of resin C | | Parts by mass |
|---|---|---|
| Bisphenol type epoxy resin | ZX1059 | 10 |
| Crystalline bifunctional epoxy resin | YX4000HK | 10 |
| Dicyclopentadiene type epoxy resin | HP-7200H | 20 |
| Solvent naphtha | | 40 |
| Epoxy resin A | | 12 |
| Triazine skeleton-containing phenol resin | LA-7054 | 15 |
| Curing accelerator (4-dimethylaminopyridine) | DMAP | 3 |
| Flame retardant | HCA-HQ | 2 |

[Table 7]

| Epoxy resin A | | Weight (g) |
|---|---|---|
| Bixylenol type epoxy resin | YX4000 | 222 |
| Bisphenol acetophenone | | 15 |
| Biscresol fluorene | | 170 |
| Cyclohexanone | | 150 |
| Tetramethylammonium chloride solution | | 0.5 |

Table 8 shows composition of the resin D. First, 5 parts by mass of a liquid naphthalene type epoxy resin (epoxy equivalent: 144, "HP4032SS" manufactured by DIC Corporation), 5 parts by mass of a crystalline bifunctional epoxy resin ("YX4000HK" manufactured by Mitsubishi Chemical Corporation, epoxy equivalent: approximately 185), and 12 parts by mass of a biphenyl type epoxy resin ("NC3000L" manufactured by Nippon Kayaku Co., Ltd., epoxy equivalent: 269) were dissolved in 30 parts by mass of solvent naphtha by heating while stirring was carried out. In this manner, a mixed solution D was obtained.

Next, a phenoxy resin A was synthesized. Table 9 shows composition of the phenoxy resin A. First, 191 g of a tetramethyl biphenyl type epoxy resin (YX4000 manufactured by Mitsubishi Chemical Corporation, epoxy equivalent: 185), 210 g of 9,10-dihydroxyanthracene (phenolic hydroxyl equivalent: 210), and 150 g of cyclohexanone were introduced into a reaction vessel, and dissolved by stirring. Subsequently, 0.5 g of a tetramethylammonium chloride solution was added dropwise to a resultant dissolved solution. A resultant mixture was reacted under a nitrogen atmosphere, and a reaction product was diluted with a solvent to obtain the phenoxy resin A.

Thereafter, the mixed solution D which had been cooled to room temperature (25°C), 5 parts by mass of the phenoxy resin A, 20 parts by mass of a prepolymer of bisphenol A dicyanate ("BA230S75" manufactured by Lonza Japan Ltd., cyanate equivalent: approximately 232, an MEK solution having a non-volatile content of 75% by mass), 6 parts by mass of a phenol novolac type polyfunctional cyanate ester resin ("PT30S" manufactured by Lonza Japan Ltd., cyanate equivalent: approximately 133, an MEK solution having a non-volatile content of 85% by mass), 1 part by mass of a curing accelerator (4-dimethylaminopyridine, an MEK solution having a solid content of 2% by mass), 3 parts by mass of a curing accelerator (manufactured by Tokyo Chemical Industry Co., Ltd., cobalt(III) acetylacetonate (Co(III)Ac), an MEK solution having a solid content of 1% by mass), 2 parts by mass of rubber particles (Staphyloid AC3816N, manufactured by Ganz Chemical Co., Ltd.), and 2 parts by mass of a flame retardant ("HCA-HQ" manufactured by SANKO CO., LTD., 10-(2,5-dihydroxyphenyl)-10-hydro-9-oxa-10-phosphaphenanthrene-10-oxide, average particle size of 2 $\mu$m) were mixed. A resultant mixture was regarded as the resin D.

[Table 8]

| Composition of resin D | | Parts by mass |
|---|---|---|
| Liquid naphthalene type epoxy resin | HP4032SS | 5 |
| Crystalline bifunctional epoxy resin | YX4000HK | 5 |

(continued)

| Composition of resin D | | Parts by mass |
|---|---|---|
| Biphenyl type epoxy resin | NC3000L | 12 |
| Solvent naphtha | | 30 |
| Phenoxy resin A | | 5 |
| Bisphenol A dicyanate prepolymer | BA230S75 | 20 |
| Phenol novolac type polyfunctional cyanate ester resin | PT30S | 6 |
| Curing accelerator (4-dimethylaminopyridine) | DMAP | 1 |
| Curing accelerator (cobalt(III) acetylacetonate) | | 3 |
| Rubber particles | Staphyloid AC3816N | 2 |
| Flame retardant | HCA-HQ | 2 |

[Table 9]

| Phenoxy resin A | | Weight (g) |
|---|---|---|
| Bixylenol type epoxy resin | YX4000 | 191 |
| 9,10-dihydroxyanthracene | | 210 |
| Cyclohexanone | | 150 |
| Tetramethylammonium chloride solution | | 0.5 |

Table 10 shows composition of the resin E. First, 15 parts by mass of a liquid bisphenol A type epoxy resin (epoxy equivalent: 180, "jER828EL" manufactured by Japan Epoxy Resin Co., Ltd.) and 15 parts by mass of a biphenyl type epoxy resin (epoxy equivalent: 291, "NC3000H" manufactured by Nippon Kayaku Co., Ltd.) were dissolved in 15 parts by mass of MEK and 15 parts by mass of cyclohexanone by heating while stirring was carried out. In this manner, a mixed solution E was obtained. Subsequently, the mixed solution E after dissolution was mixed with 20 parts by mass of a naphthalene type active ester compound ("EXB9460S-65T" manufactured by DIC Corporation, active ester equivalent: 223, a toluene solution having a solid content of 65%), 6 parts by mass of a triazine-containing cresol novolac resin ("LA3018-50P" manufactured by DIC Corporation, phenol equivalent: 151, a 2-methoxypropanol solution having a solid content of 50%), 0.05 parts by mass of a curing accelerator (manufactured by KOEI CHEMICAL COMPANY, LIMITED, "4-dimethylaminopyridine"), and 7 parts by mass of a phenoxy resin (YL6954BH30, a solution containing MEK and cyclohexanone at 1:1, the solution having a non-volatile content of 30% by weight, weight-average molecular weight: 40000). A resultant mixture was regarded as the resin E.

[Table 10]

| Composition of resin E | | Parts by mass |
|---|---|---|
| Liquid bisphenol A type epoxy resin | jER828EL | 15 |
| Biphenyl type epoxy resin | NC3000H | 15 |
| Methyl ethyl ketone | | 15 |
| Cyclohexanone | | 15 |
| Naphthalene type active ester compound | EXB9460S-65T | 20 |
| Triazine-containing cresol novolac resin | LA3018-50P | 6 |
| Curing accelerator (4-dimethylaminopyridine) | DMAP | 0.05 |
| Phenoxy resin | YL6954BH30 | 7 |

To prepare resin varnishes, 50 parts by mass, 80 parts by mass, and 115 parts by mass of each of the hexagonal boron nitride powders of Examples 1 to 4 were mixed with the resin A or the resin B, and uniformly dispersed with use of a high-speed rotary mixer. Next, each of the resin varnishes was applied, with use of a die coater, to polyethylene terephthalate (thickness: 38 $\mu$m) so that a resin thickness would be 40 $\mu$m after drying, and then dried at 80°C to 120°C (average: 100°C) for 6 minutes to obtain a sheet-like adhesive film (Examples 5 to 28). In the same manner, each of the hexagonal boron nitride powders of Comparative Examples 1 and 2 was mixed with resin A or the resin B to obtain a sheet-like adhesive film (Comparative Examples 3 to 14).

To prepare resin varnishes, 50 parts by mass, 80 parts by mass, and 115 parts by mass of each of the hexagonal boron nitride powders of Examples 1 to 4, which had been surface-treated with use of a phenylaminosilane-based coupling agent ("KBM573", manufactured by Shin-Etsu Chemical Co., Ltd.), were mixed with the resin C or the resin D, and uniformly dispersed with use of a high-speed rotary mixer. Next, each of the resin varnishes was uniformly applied to a release surface of a polyethylene terephthalate film ("AL5" manufactured by LINTEC Corporation, thickness: 38 $\mu$m) so that a resin composition layer would have a thickness of 30 $\mu$m after drying, and then dried at 80°C to 120°C (average: 100°C) for 4 minutes to obtain a sheet-like adhesive film (Examples 29 to 52). In the same manner, each of the hexagonal boron nitride powders of Comparative Examples 1 and 2 was mixed with resin C or the resin D to obtain a sheet-like adhesive film (Comparative Examples 15 to 26).

Furthermore, to prepare resin varnishes, 50 parts by mass, 80 parts by mass, and 115 parts by mass of each of the hexagonal boron nitride powders of Examples 1 to 4 were mixed with the resin E, and uniformly dispersed with use of a high-speed rotary mixer. Next, each of the resin varnishes was applied, with use of a die coater, to polyethylene terephthalate (thickness: 38 $\mu$m) so that a resin thickness would be 40 $\mu$m after drying, and then dried at 80°C to 120°C (average: 100°C) for 6 minutes (amount of residual solvent: approximately 2% by weight). Subsequently, while a polypropylene film having a thickness of 15 $\mu$m was bonded to a surface of the resin composition, an adhesive film thus obtained was wound into a roll. The adhesive film in the form of a roll was slit into a piece having a width of 507 mm. In this manner, a sheet-like adhesive film having a size of 507 mm by 336 mm was obtained (Examples 53 to 64). In the same manner, each of the hexagonal boron nitride powders of Comparative Examples 1 and 2 was mixed with the resin E to obtain a sheet-like adhesive film (Comparative Examples 27 to 32).

The obtained sheet-like adhesive films were visually evaluated in terms of whether forming into a sheet was successful or not. In a case where, in appearance, a smooth and uniform surface was able to be formed, it was evaluated that forming into a sheet was successful. In a case where, in appearance, there was/were unevenness, liquid repellency, a streak mark, and/or the other defect, it was evaluated that forming into a sheet was unsuccessful.

<Results>

Tables 11 to 13 show whether the sheet-like adhesive films were formed successfully as sheets or not in each of Examples 5 to 64 and Comparative Examples 3 to 32. It was shown that in a case where the hexagonal boron nitride powders of Examples 1 to 4 were used, all of the resin compositions were able to be formed into sheets. In a case where the hexagonal boron nitride powder of Comparative Example 1 was used, the resin compositions were able to be formed into sheets when the amount of the boron nitride powder was 50 parts by mass and 80 parts by mass. On the other hand, when the amount of the boron nitride powder was 115 parts by mass, the resin compositions were unable to be formed into sheets because liquid repellency and/or a streak mark occurred during application with use of a die coater, which resulted in an appearance defect. In a case where the hexagonal boron nitride powder of Comparative Example 2 was used, the resin compositions were able to be formed into sheets when the amount of the boron nitride powder was 50 parts by mass. On the other hand, when the amount of the boron nitride powder was 80 parts by mass and 115 parts by mass, the resin compositions were unable to be formed into sheets because liquid repellency and/or a streak mark occurred during application with use of a die coater, which resulted in an appearance defect. Thus, it was shown that, by using the hexagonal boron nitride powder in accordance with an embodiment of the present invention, it is possible to prepare a sheet-like adhesive film which has no problem in appearance.

[Table 11]

| | Resin used | Amount of resin used [parts by mass] | Hexagonal boron nitride powder used | Hexagonal boron nitride powders [parts by mass] | Success or Unsuccess of forming into sheet |
|---|---|---|---|---|---|
| Example 5 | | | Example 1 | 50 | S |
| Example 6 | | | | 80 | S |
| Example 7 | | | | 115 | S |
| Example 8 | | | Example 2 | 50 | S |
| Example 9 | | | | 80 | S |
| Example 10 | | | | 115 | S |
| Example 11 | | | Example 3 | 50 | S |
| Example 12 | | | | 80 | S |
| Example 13 | | | | 115 | S |
| Example 14 | | | Example 4 | 50 | S |
| Example 15 | Resin A | 118.15 | | 80 | S |
| Example 16 | | | | 115 | S |
| Comparative Example 3 | | | Comparative Example 1 | 50 | S |
| Comparative Example 4 | | | | 80 | S |
| Comparative Example 5 | | | | 115 | U |
| Comparative Example 6 | | | Comparative Example 2 | 50 | S |
| Comparative Example 7 | | | | 80 | U |
| Comparative Example 8 | | | | 115 | U |

(continued)

| | Resin used | Amount of resin used [parts by mass] | Hexagonal boron nitride powder used | Hexagonal boron nitride powders [parts by mass] | Success or Unsuccess of forming into sheet |
|---|---|---|---|---|---|
| Example 17 | Resin B | 80.1 | Example 1 | 50 | S |
| Example 18 | | | | 80 | S |
| Example 19 | | | | 115 | S |
| Example 20 | | | Example 2 | 50 | S |
| Example 21 | | | | 80 | S |
| Example 22 | | | | 115 | S |
| Example 23 | | | Example 3 | 50 | S |
| Example 24 | | | | 80 | S |
| Example 25 | | | | 115 | S |
| Example 26 | | | Example 4 | 50 | S |
| Example 27 | | | | 80 | S |
| Example 28 | | | | 115 | S |
| Comparative Example 9 | | | Comparative Example 1 | 50 | S |
| Comparative Example 10 | | | | 80 | S |
| Comparative Example 11 | | | | 115 | U |
| Comparative Example 12 | | | Comparative Example 2 | 50 | S |
| Comparative Example 13 | | | | 80 | U |
| Comparative Example 14 | | | | 115 | U |
| *The abbreviations "S" and "U" stand for "Success" and "Unsuccess", respectively. | | | | | |

[Table 12]

| | Resin used | Amount of resin used [parts by mass] | Hexagonal boron nitride powder used | Hexagonal boron nitride powders [parts by mass] | Success or Unsuccess of forming into sheet |
|---|---|---|---|---|---|
| Example 29 | Resin C | 112 | Example 1 | 50 | S |
| Example 30 | | | | 80 | S |
| Example 31 | | | | 115 | S |
| Example 32 | | | Example 2 | 50 | S |
| Example 33 | | | | 80 | S |
| Example 34 | | | | 115 | S |
| Example 35 | | | Example 3 | 50 | S |
| Example 36 | | | | 80 | S |
| Example 37 | | | | 115 | S |
| Example 38 | | | Example 4 | 50 | S |
| Example 39 | | | | 80 | S |
| Example 40 | | | | 115 | S |
| Comparative Example 15 | | | Comparative Example 1 | 50 | S |
| Comparative Example 16 | | | | 80 | S |
| Comparative Example 17 | | | | 115 | U |
| Comparative Example 18 | | | Comparative Example 2 | 50 | S |
| Comparative Example 19 | | | | 80 | U |
| Comparative Example 20 | | | | 115 | U |

(continued)

| | Resin used | Amount of resin used [parts by mass] | Hexagonal boron nitride powder used | Hexagonal boron nitride powders [parts by mass] | Success or Unsuccess of forming into sheet |
|---|---|---|---|---|---|
| Example 41 | Resin D | 91 | Example 1 | 50 | S |
| Example 42 | | | | 80 | S |
| Example 43 | | | | 115 | S |
| Example 44 | | | Example 2 | 50 | S |
| Example 45 | | | | 80 | S |
| Example 46 | | | | 115 | S |
| Example 47 | | | Example 3 | 50 | S |
| Example 48 | | | | 80 | S |
| Example 49 | | | | 115 | S |
| Example 50 | | | Example 4 | 50 | S |
| Example 51 | | | | 80 | S |
| Example 52 | | | | 115 | S |
| Comparative Example 21 | | | Comparative Example 1 | 50 | S |
| Comparative Example 22 | | | | 80 | S |
| Comparative Example 23 | | | | 115 | U |
| Comparative Example 24 | | | Comparative Example 2 | 50 | S |
| Comparative Example 25 | | | | 80 | U |
| Comparative Example 26 | | | | 115 | U |
| *The abbreviations "S" and "U" stand for "Success" and "Unsuccess", respectively. | | | | | |

[Table 13]

| | Resin used | Amount of resin used [parts by mass] | Hexagonal boron nitride powder used | Hexagonal boron nitride powders [parts by mass] | Success or Unsuccess of forming into sheet |
|---|---|---|---|---|---|
| Example 53 | Resin E | 93.05 | Example 1 | 50 | S |
| Example 54 | | | | 80 | S |
| Example 55 | | | | 115 | S |
| Example 56 | | | Example 2 | 50 | S |
| Example 57 | | | | 80 | S |
| Example 58 | | | | 115 | S |
| Example 59 | | | Example 3 | 50 | S |
| Example 60 | | | | 80 | S |
| Example 61 | | | | 115 | S |
| Example 62 | | | Example 4 | 50 | S |
| Example 63 | | | | 80 | S |
| Example 64 | | | | 115 | S |
| Comparative Example 27 | | | Comparative Example 1 | 50 | S |
| Comparative Example 28 | | | | 80 | S |
| Comparative Example 29 | | | | 115 | U |
| Comparative Example 30 | | | Comparative Example 2 | 50 | S |
| Comparative Example 31 | | | | 80 | U |
| Comparative Example 32 | | | | 115 | U |
| *The abbreviations "S" and "U" stand for "Success" and "Unsuccess", respectively. | | | | | |

**Claims**

1. A method of producing a hexagonal boron nitride powder, comprising

- disintegrating, by a means which substantially does not involve pulverization of primary particles, a hexagonal boron nitride raw material powder which contains (i) hexagonal boron nitride particles each having an aspect ratio of 1.5 to 5.0 and (ii) an aggregate that contains hexagonal boron nitride particles each having an aspect ratio of more than 5.0.

2. The method as set forth in claim 1, wherein the hexagonal boron nitride raw material powder contains, at a proportion of not less than 20% by number but not more than 90% by number, the hexagonal boron nitride particles each having an aspect ratio of 1.5 to 5.0.

3. The method as set forth in claim 1 or 2, wherein the hexagonal boron nitride raw material powder has a D50 of 0.2 $\mu$m to 10.0 $\mu$m and a D90/D10 of more than 3.0.

4. The method as set forth in any one of claims 1 to 3, wherein the hexagonal boron nitride raw material powder is disintegrated so that the hexagonal boron nitride powder has a D90/D10 of not more than 3.0.

5. A hexagonal boron nitride powder comprising, at a proportion of not less than 20% by number, hexagonal boron nitride particles each having an aspect ratio of 1.5 to 5.0, said hexagonal boron nitride powder having a D50 of 0.2 μm to 10.0 μm and a D90/D10 of not more than 3.0.

6. A resin composition comprising a hexagonal boron nitride powder recited in claim 5 and a resin.

**INTERNATIONAL SEARCH REPORT**

| International application No. |
| --- |
| PCT/JP2020/039314 |

A. CLASSIFICATION OF SUBJECT MATTER
C01B 21/064(2006.01)i; C08L 101/00(2006.01)i; C08K 3/38(2006.01)i
FI: C01B21/064 B; C01B21/064 Z; C08L101/00; C08K3/38

According to International Patent Classification (IPC) or to both national classification and IPC

B. FIELDS SEARCHED

Minimum documentation searched (classification system followed by classification symbols)
C01B21/064; C08L101/00; C08K3/38

Documentation searched other than minimum documentation to the extent that such documents are included in the fields searched
Published examined utility model applications of Japan                1922-1996
Published unexamined utility model applications of Japan              1971-2020
Registered utility model specifications of Japan                      1996-2020
Published registered utility model applications of Japan              1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2019-182737 A (TOKUYAMA CORPORATION) 24 October 2019 (2019-10-24) claims, paragraphs [0002], [0022], [0048], [0059]-[0072], table 1 | 5, 6<br>1-4 |
| Y | JP 1-176208 A (UBE KAGAKU KOGYO KK) 12 July 1989 (1989-07-12) page 2, upper left column, lines 15-19 | 5, 6 |
| A | JP 2018-43899 A (TOKUYAMA CORPORATION) 22 March 2018 (2018-03-22) paragraph [0033] | 1-6 |
| A | JP 2016-141600 A (MITSUBISHI CHEMICAL CORP.) 08 August 2016 (2016-08-08) entire text | 1-6 |
| A | WO 2017/145869 A1 (SHOWA DENKO KABUSHIKI KAISHA) 31 August 2017 (2017-08-31) entire text | 1-6 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 December 2020 (16.12.2020) | 28 December 2020 (28.12.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

International application No.

PCT/JP2020/039314

| Patent Documents referred in the Report | Publication Date | Patent Family | Publication Date |
|---|---|---|---|
| JP 2019-182737 A | 24 Oct. 2019 | (Family: none) | |
| JP 1-176208 A | 12 Jul. 1989 | (Family: none) | |
| JP 2018-43899 A | 22 Mar. 2018 | (Family: none) | |
| JP 2016-141600 A | 08 Aug. 2016 | (Family: none) | |
| WO 2017/145869 A1 | 31 Aug. 2017 | US 2018/0354792 A1 entire text EP 3421420 A1 CN 108473308 A KR 10-2018-0115673 A TW 201733907 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016141600 A